# EUROPEAN PATENT APPLICATION

(11) **EP 4 703 111 A1**
(43) Date of publication of application: **04.03.2026**
(21) Application number: 25195375.8
(22) Date of filing: 12.08.2025
(51) Int. Cl.: B29B 7/72, B29B 7/82, B29C 45/78, B29C 48/80, B29C 48/92

(54) **CONTINUOUS KNEADING APPARATUS AND ITS CONTROL METHOD**

(30) Priority: 26.08.2024 JP 2024144091
(71) Applicant: The Japan Steel Works, Ltd., Tokyo 141-0032 (JP)
(72) Inventor: MAENISHI, Ryuichiro, Shinagawa-ku, Tokyo, 141-0032 (JP); UEDA, Yoshiki, Shinagawa-ku, Tokyo, 141-0032 (JP); MATSUMOTO, Wataru, Shinagawa-ku, Tokyo, 141-0032 (JP)
(74) Representative: Simmons & Simmons LLP (Munich)

(57) **Abstract**

A continuous kneading apparatus according to an embodiment includes a first temperature sensor (61) disposed inside a cylinder (11) and configured to measure a temperature of a molten resin (82) obtained by melting resin pellets (81), and a controller (70) configured to perform feedback-control for a heating unit (14) based on the temperature of the molten resin (82) measured by the first temperature sensor (61).

## Description

### BACKGROUND

The present disclosure relates to a continuous kneading apparatus and its control method.

Extrusion molding apparatuses and injection molding apparatuses for resins are equipped with a continuous kneading apparatus that kneads resin pellets charged into a cylinder by using a screw while heating the pellets by using a heater. As disclosed in Patent Literature 1, the inventors have developed a continuous kneading apparatus that measures the temperature of a plurality of parts of a cylinder each of which is heated by a respective one of a plurality of heaters by using a respective one of a plurality of temperature sensors, and performs feedback control for each of the heaters based on a respective one of the measured temperatures.

Patent Literature 1: Japanese Unexamined Patent Application Publication No. 2022-067240

### SUMMARY

The inventors have found various problems in the development of such a continuous kneading apparatus.

For example, the quality of a resin to be molded depends on the temperature of a molten resin discharged from the continuous kneading apparatus, and the temperature of the molten resin is affected not only by the heat absorption from the cylinder but also by the shear heat generation and the like of the resin caused by the screw.

However, in the continuous kneading apparatus, each heater is feedback-controlled based on the measured temperature of the part of the cylinder heated by that heater. Therefore, the temperature of the molten resin discharged from the continuous kneading apparatus cannot be accurately obtained, so that it may take a long time before the quality of the resin to be molded is stabilized and hence a considerable amount of the resin material may be wasted.

Other problems and novel features will be clarified from the descriptions in this specification and the attached drawings.

A continuous kneading apparatus according to an embodiment includes: a first temperature sensor disposed inside a cylinder and configured to measure a temperature of a molten resin obtained by melting resin pellets; and a controller configured to perform feedback control for a heating unit based on the temperature of the molten resin measured by the first temperature sensor.

A method for controlling a continuous kneading apparatus according to an embodiment is a method for controlling a continuous kneading apparatus including a first temperature sensor disposed inside a cylinder and configured to measure a temperature of a molten resin obtained by melting resin pellets, the method including the step of (a) performing feedback control for a heating unit based on the temperature of the molten resin measured by the first temperature sensor.

According to the above-described embodiment, it is possible to provide an excellent continuous kneading apparatus.

The above and other objects, features and advantages of the present disclosure will become more fully understood from the detailed description given hereinbelow and the accompanying drawings.

### BRIEF DESCRIPTION OF DRAWINGS

Fig. 1 is a schematic cross-sectional view showing a configuration of a continuous kneading apparatus according to a first embodiment;
Fig. 2 is a schematic cross-sectional view showing a configuration of a continuous kneading apparatus according to a comparative example;
Fig. 3 is a block diagram showing a configuration of a controller 70 according to a second embodiment;
Fig. 4 is a flowchart showing a method for controlling a continuous kneading apparatus according to the second embodiment;
Fig. 5 is a block diagram showing a configuration of a controller 70 according to a modified example of the second embodiment;
Fig. 6 is a schematic cross-sectional view showing a configuration of a continuous kneading apparatus according to a third embodiment;
Fig. 7 is a flowchart showing a method for controlling a continuous kneading apparatus according to the third embodiment;
Fig. 8 is a schematic cross-sectional view of the continuous kneading apparatus in a cylinder temperature control mode;
Fig. 9 is a schematic cross-sectional view of the continuous kneading apparatus in a resin temperature control mode; and
Fig. 10 is a schematic cross-sectional view of the continuous kneading apparatus in a resin temperature control mode (cascade control).

### DESCRIPTION OF EMBODIMENTS

Specific embodiments are described hereinafter in detail with reference to the drawings. However, the present disclosure is not limited to the below-shown embodiments. Further, the following descriptions and the drawings are simplified as appropriate for clarifying the explanation.

### (First Embodiment)

### <Configuration of Continuous Kneading Apparatus>

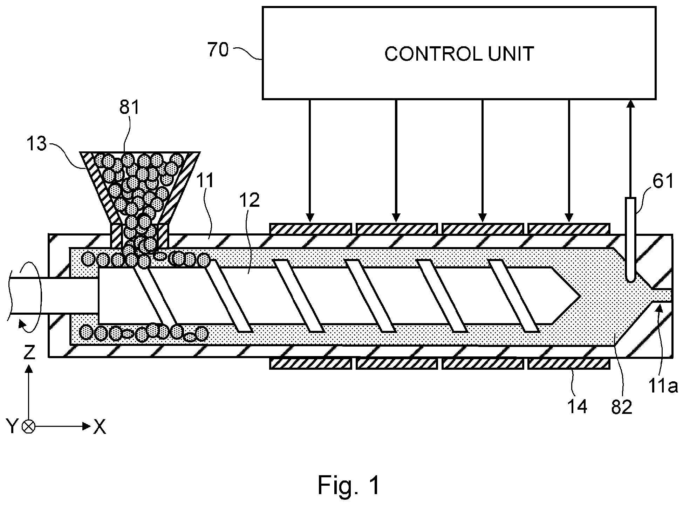

Firstly, a configuration of a continuous kneading apparatus according to a first embodiment will be described with reference to Fig. 1. Fig. 1 is a schematic cross-sectional view showing the configuration of the continuous kneading apparatus according to the first embodiment.

As shown in Fig. 1, the continuous kneading apparatus according to the first embodiment includes a cylinder 11, a screw 12, a hopper 13, heaters 14, a temperature sensor 61, and a controller 70.

Note that needless to say, right-handed XYZ orthogonal coordinate systems shown in Fig. 1 and other drawings are just shown for the sake of convenience for explaining the positional relationship among components. In general, the Z-axis positive direction is the vertically upward, and the XY-plane is the horizontal plane. These matters apply to all the drawings.

Further, the continuous kneading apparatus according to this embodiment is used for, for example, an extrusion molding apparatus, but may also be used for an injection molding apparatus. In the case of an injection molding apparatus, the screw 12 is configured so as to be movable in the X-axis direction in order to perform an injection operation.

The cylinder 11 is a cylindrical member extending in the x-axis direction.

The screw 12 is disposed so as to extend in the x-axis direction, and is rotatably housed inside the cylinder 11. Although not shown in the drawings, for example, a motor is connected to the screw 12 as a rotational driving source with a speed reducer interposed therebetween.

Note that only one screw 12 may be provided in the extrusion molding apparatus, or a plurality of screws 12 may be provided therein. For example, when only one screw 12 is provided in the extrusion molding apparatus, it is called a single-screw extrusion molding apparatus, and when two screws 12 are provided therein, it is called a twin-screw extrusion molding apparatus.

The hopper 13 is a cylindrical member for charging resin pellets 81, which are raw materials for a resin molded article to be manufactured, into the cylinder 11. The hopper 13 is disposed in the upper side of an end part of the cylinder 11 on the X-axis positive side thereof.

As shown in Fig. 1, the heaters 14 are circular annular or rectangular annular heaters disposed so as to cover the outer peripheral surface of the cylinder 11. The heaters 14 arranged in parallel to each other along the longitudinal direction (x-axis direction) of the cylinder 11 constitute a heating unit. As just an example, in Fig. 1, four heaters 14 are provided on the front side (x-axis positive side) of the hopper 13. Each of the plurality of heaters 14 can be individually controlled by the controller 70.

Note that the number of heaters 14 in the heating unit is not limited to any particular number. That is, only one heater 14 may be provided in the heated parts, or a plurality of heaters 14 may be provided therein.

The temperature sensor 61 is disposed inside the cylinder 11 and measures the temperature of a molten resin 82 obtained by melting the resin pellets 81. Although there is no particular limitation, as shown in Fig. 1, for example, the temperature sensor 61 is disposed between the tip of the screw 12 and a discharge port 11a. The temperature sensor 61 is, for example, a thermocouple. In the example shown in Fig. 1, the temperature sensor 61 is inserted into a through hole formed in the cylinder 11 and is disposed so as to be in contact with the molten resin 82.

The controller 70 performs feedback control for the heaters 14 based on the temperature of the molten resin 82 measured by the temperature sensor 61 (measured resin temperature). More specifically, the controller 70 controls the outputs of the heaters 14 so that the measured resin temperature measured by the temperature sensor 61 approaches a set temperature (target temperature).
Although there is no particular limitation, the controller 70 is called, for example, a PLC (Programmable Logic Controller). The controller 70 may be, for example, a PC (Personal Computer).

Note that although not shown in the drawing, the controller 70 includes an arithmetic unit such as a CPU (Central Processing Unit), and a memory such as a RAM (Random Access Memory) and a ROM (Read Only Memory) in which various programs and various data are stored. That is, the controller 70 has a function as a computer and controls the heaters 14 based on the aforementioned various programs and the like.

Therefore, the controller 70 shown in Fig. 1 can be formed, as hardware, by the aforementioned CPU, the memory, and other circuits. Alternatively, the controller 70 can be implemented, as software, by a program or the like stored in a memory. That is, the controller 70 can be implemented in various forms by combining hardware and software.

In the continuous kneading apparatus according to the first embodiment, the resin pellets 81 supplied from the hopper 13 are heated by the heaters 14 inside the cylinder 11, and are sheared and melted by the rotating screw 12, so that they change into the molten resin 82. Further, the molten resin 82 is extruded from the base side of the screw 12 toward the front side thereof (in the X-axis positive direction) by the rotating screw 12, and is discharged from the discharge port 11a.

### <Configuration of Continuous Kneading Apparatus according to Comparative Example>

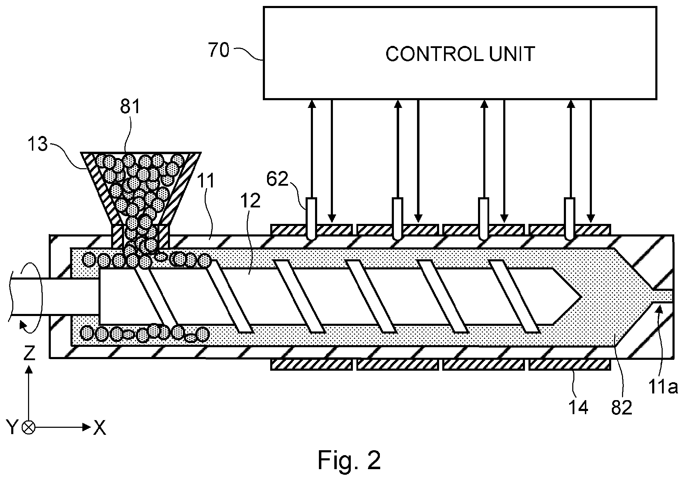

A configuration of a continuous kneading apparatus according to a comparative example will be described hereinafter with reference to Fig. 2. Fig. 2 is a schematic cross-sectional view showing the configuration of the continuous kneading apparatus according to the comparative example.

As shown in Fig. 2, the continuous kneading apparatus according to the comparative example includes temperature sensors 62 instead of the temperature sensor 61. That is, the continuous kneading apparatus according to the comparative example does not include the temperature sensor 61.

As shown in Fig. 2, the temperature sensors 62 measures the temperatures of a plurality of parts of the cylinder 11 each of which is heated by a respective one of a plurality of heaters 14. The temperature sensors 62 are, for example, thermocouples. In the example shown in Fig. 2, each of the temperature sensors 62 is inserted into a through hole formed in a respective one of the heaters 14 and is disposed so as to be in contact with the cylinder 11.

As shown in Fig. 2, in the continuous kneading apparatus according to the comparative example, the controller 70 performs feedback control for each of the heaters 14 based on the measured temperature of a respective one of the parts of the cylinder 11 measured by a respective one of the temperature sensors 62. More specifically, the controller 70 controls the output of each of the heaters 14 so that the measured temperature of a respective one of the parts of the cylinder 11 measured by a respective one of the temperature sensors 62 approaches a set temperature (target temperature).

Note that the quality of the resin to be molded depends on the temperature of the molten resin 82 discharged from the continuous kneading apparatus, and the temperature of the molten resin 82 is affected not only by the heat absorption from the cylinder 11 but also by the shear heat generation and the like of the resin pellets 81 caused by the screw 12.

In the continuous kneading apparatus according to the comparative example, each heater 14 is feedback-controlled based on the measured temperature of the part of the cylinder 11 heated by that heater 14. Therefore, the temperature of the molten resin 82 discharged from the continuous kneading apparatus cannot be accurately obtained, so that it may take a long time before the quality of the resin to be molded is stabilized and hence a considerable amount of the resin material may be wasted.

In contrast to this, the continuous kneading apparatus according to this embodiment shown in Fig. 1 includes the temperature sensor 61 disposed between the tip of the screw 12 and the discharge port 11a in the cylinder 11 and measures the temperature of the molten resin 82 obtained by melting the resin pellets 81. Therefore, in the continuous kneading apparatus according to this embodiment, it is possible to obtain the temperature of the molten resin 82 to be discharged more accurately than in the continuous kneading apparatus according to the comparative example, and thereby to reduce the time required to stabilize the quality of the resin to be molded and reduce the amount of the resin material.

### (Second Embodiment)

Next, a continuous kneading apparatus according to a second embodiment will be described. The overall configuration of the continuous kneading apparatus according to the second embodiment is similar to that of the continuous kneading apparatus according to the first embodiment shown in Fig. 1, and therefore the description thereof will be omitted. The internal configuration of the controller 70 of the continuous kneading apparatus according to this embodiment differs from that of the continuous kneading apparatus according to the first embodiment.

### <Configuration of Controller 70 according to Second Embodiment>

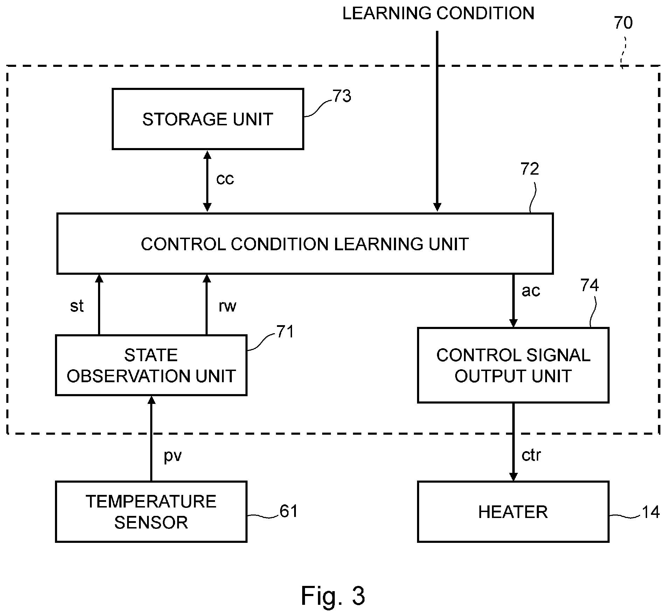

The configuration of the controller 70 according to the second embodiment will be described in detail with reference to Fig. 3. Fig. 3 is a block diagram showing the configuration of the controller 70 according to the second embodiment. As shown in Fig. 3, the controller 70 according to this embodiment includes a state observation unit 71, a control condition learning unit 72, a storage unit 73, and a control signal output unit 74.

The controller 70 according to this embodiment performs feedback control for the heaters 14 based on the temperature of the molten resin 82 measured by the temperature sensor 61 (measured resin temperature) as the controller 70 according to the first embodiment does, and also learns a control condition(s) for each heater 14.

Note that each of the functional blocks constituting the controller 70 can be implemented by hardware such as a CPU, a memory, and other circuits, or can be implemented by software such as a program(s) loaded in a memory or the like. Therefore, each functional block can be implemented in various forms by computer hardware, software, or combinations thereof.

The state observation unit 71 calculates a control error of each of the heaters 14 from a measured temperature value pv acquired from the temperature sensors 61. The control error is a difference between a target value and a measured value pv. Note that the target value is a target temperature set for each of the heaters 14. Meanwhile, the measured value pv is a measured temperature value acquired from the temperature sensor 61.

Then, the state observation unit 71 determines, for each of the heaters 14, a current state st and a reward rw for an action ac selected in the past (e.g., selected in the last time) based on the calculated control error.

The state st is defined in advance in order to classify values of the control error, which can take any of infinite number of values, into a finite number of groups. As a simple example for an explanatory purpose, when the control error is represented by err, for example, a range "-4.0°C ≤ err < -3.0°C" is defined as a state st1; a range "-3.0°C ≤ err < -2.0°C" is defined as a state st2; a range "-2.0°C ≤ err < -1.0°C" is defined as a state st3; a range "-1.0°C ≤ err < 1.0°C" is defined as a state st4; a range " 1.0°C ≤ err < 2.0°C" is defined as a state st5; a range "2.0°C ≤ err < 3.0°C" is defined as a state st6; a range "3.0°C ≤ err < 4.0°C" is defined as a state st7; and a range "4.0°C ≤ err < 5.0°C" is defined as a state st8. In practice, in many cases, a larger number of states st each having a narrower range may be defined.

The reward rw is an index for evaluating an action ac that was selected in a past state st.

Specifically, when the absolute value of the calculated current control error is smaller than the absolute value of the past control error, the state observation unit 71 determines that the action ac selected in the past is appropriate and sets, for example, a positive value to the reward rw. In other words, the reward rw is determined so that the previously selected action ac is more likely to be selected again in the same state st as the past state.

On the other hand, when the absolute value of the calculated current control error is larger than the absolute value of the past control error, the state observation unit 71 determines that the action ac selected in the past is inappropriate and sets, for example, a negative value to the reward rw. In other words, the reward rw is determined so that the previously selected action ac is less likely to be selected again in the same state st as the past state.

Note that specific examples of the reward rw will be described later. Further, the value of the reward rw can be determined as appropriate. For example, the reward rw may have a positive value at all times, or the reward rw may have a negative value at all times.

The control condition learning unit 72 performs reinforcement learning for each of the heaters 14. Specifically, the control condition learning unit 72 updates a control condition (a learning result) based on the reward rw, and selects an optimum action ac corresponding to the current state st under the updated control condition. The control condition is a combination of a state st and an action ac. Table 1 shows simple control conditions (learning results) corresponding to the above-described states st1 to st8. In the example shown in Fig. 3, the control condition learning unit 72 stores the updated control condition cc in the storage unit 73, which is, for example, a memory, and updates the control condition cc by reading it from the storage unit 73.

**[Table 1]**

| | st1 -4.0~ -3.0 °C | st2 -3.0~ -2.0 °C | st3 -2.0~ -1.0 °C | st4 -1.0~ 1.0 °C | st5 1.0~2.0 °C | st6 2.0~3.0 °C | st7 3.0~4.0 °C | st8 4.0~5.0 °C |
|---|---|---|---|---|---|---|---|---|
| ac1 -1.0% | -4.6 | -4.2 | -4.2 | -3.2 | -2.5 | +0.3 | +2.6 | +5.2 |
| ac2 -0.5% | -6.2 | -5.2 | +1.5 | +2.5 | +3.0 | +3.5 | +3.6 | +3.2 |
| ac3 0% | -2.2 | -1.5 | +2.2 | +5.2 | +2.3 | +2.0 | +0.1 | -2.3 |
| ac4 +0.5% | +4.2 | +4.6 | +4.4 | +2.5 | -0.2 | -0.8 | -2.2 | -3.5 |
| ac5 +1.0% | +5.5 | +4.2 | +3.5 | +2.2 | -3.0 | -4.4 | -4.6 | -5.2 |

The Table 1 shows control conditions (learning results) by Q learning, which is an example of the reinforcement learning. The aforementioned eight states st1 to st8 are shown in the uppermost row in the Table 1. That is, the eight states st1 to st8 are shown in the second to ninth columns, respectively. Meanwhile, five actions ac1 to ac5 are shown in the leftmost column in the Table 1. That is, the five actions ac1 to ac5 are shown in the second to sixth rows, respectively.

Note that, in the example shown in Table 1, an action for reducing the output (e.g., the voltage) to the heater 14 by 1.0% is defined as the action ac1 (Output Change: -1%). An action for reducing the output (e.g., the voltage) to the heater 14 by 0.5% is defined as the action ac2 (Output Change: -0.5%). An action for maintaining the output to the heater 14 is defined as the action ac3 (Output Change: 0%). An action for increasing the output to the heater 14 by 0.5% is defined as the action ac4 (Output Change: +0.5%). An action for increasing the output to the heater 14 by 1.0% is defined as the action ac5 (Output Change: +1.0%). The example shown in the Table 1 is merely a simple example for an explanatory purpose. That is, in practice, in many cases, a larger number of more detailed actions ac may be defined.

A value determined by a combination of a state st and an action ac in the Table 1 is called a quality Q (st, ac). After an initial value is given, the quality Q is successively updated based on the reward rw by using a known updating formula. The initial value of the quality Q is included in, for example, the learning condition shown in Fig. 3. The learning condition is input by, for example, an operator. The initial value of the quality Q may be stored in the storage unit 73, and for example, a learning result in the past may be used as the initial value. Further, for example, the states st1 to st8 and the actions ac1 to ac5 shown in the Table 1 are included in the learning condition shown in Fig. 3.

The quality Q will be described by using the state st7 in the Table 1 as an example. In the state st7, since the control error is no lower than 3.0°C and lower than 4.0°C, the heating temperature by the target heater 14 is too high. Therefore, it is necessary to reduce the output of the target heater 14. Therefore, as a result of the learning by the control condition learning unit 72, the qualities Q of the actions ac1 and ac2 for reducing the output to the heater 14 are larger.
Meanwhile, the qualities Q of the actions ac4 and ac5 for increasing the output to the heater 14 are smaller.

In the example shown in Table 1, for example, when the control error is 3.5°C, the state st falls in the state st7. Therefore, the control condition learning unit 72 selects the optimum action ac2 having the highest quality Q in the state st7, and outputs the selected action ac2 to the control signal output unit 74.

The control signal output unit 74 reduces a control signal ctr output to the heater 14 by 0.5% based on the received action ac2. The control signal ctr is, for example, a voltage signal.

Then, when the absolute value of the next control error is smaller than the absolute value 3.5°C of the current control error, the state observation unit 71 determines that the selecting of the action ac2 in the current state st7 is appropriate, and outputs a reward rw having a positive value. Therefore, the control condition learning unit 72 updates the control condition so as to increase the quality +3.6 of the action ac2 in the state st7 according to the reward rw. As a result, in the case of the state st7, the control condition learning unit 72 continuously selects the action ac2.

On the other hand, when the absolute value of the next control error is larger than the absolute value 3.5°C of the current control error, the state observation unit 71 determines that the selecting of the action ac2 in the current state st7 is inappropriate, and outputs a reward rw having a negative value. Therefore, the control condition learning unit 72 updates the control condition so as to reduce the quality +3.6 of the action ac2 in the state st7 according to the reward rw. As a result, in the case of the state st7, when the quality of the action ac2 in the state st7 becomes smaller than the quality +2.6 of the action ac1, the control condition learning unit 72 selects the action ac1 instead of the action ac2.

Note that the timing of the updating of the control condition is not limited to the next time (e.g., not limited to when the control error is calculated the next time). That is, the timing of the updating may be determined as appropriate while taking a time lag or the like into consideration. Further, in the initial stage of the learning, the action ac may be randomly selected in order to expedite the learning. Further, although the reinforcement learning by simple Q learning is described above with reference to the Table 1, there are various types of learning algorithms such as Q learning, AC (Actor-Critic) method, TD learning, and Monte Carlo method, and the learning algorithm is not limited to in any type of algorithms. For example, when the number of states st and actions ac increase and the number of combinations thereof explosively increases, the algorithm may be selected, such as using the AC method, according to the situation.

Further, in the AC method, a probability distribution function is used as a policy function in many cases. The probability distribution function is not limited to the normal distribution function. For example, a sigmoid function, a softmax function, or the like may be used in order to simplify the probability distribution function. For example, for the purpose of simplification, a sigmoid function, a soft max function, or the like may be used. The sigmoid function is a function that is used most commonly in neural networks. Because the reinforcement learning is one of the types of the machine learning that is the same as the neural network, it can use the sigmoid function. Further, the sigmoid function has another advantage that the function itself is simple and easily handled.

As described above, there are various learning algorithms and functions to be used, and an optimum algorithm and an optimum function may be selected as appropriate for the process.

As described above, to begin with, the PID control is not used in the continuous kneading apparatus according to the second embodiment. Therefore, there is no need to adjust a parameter(s) for the PID control which would otherwise be necessary when a process condition is changed. Further, the controller 70 updates the control condition (the learning result) based on the reward rw through the reinforcement learning, and selects an optimum action ac corresponding to the current state st under the updated control condition. Therefore, even when a process condition(s) is changed, it is possible reduce the time taken for the adjustment and the amount of a resin material required therefor as compared to those in the first embodiment.

### < Control Method for Continuous Kneading Apparatus>

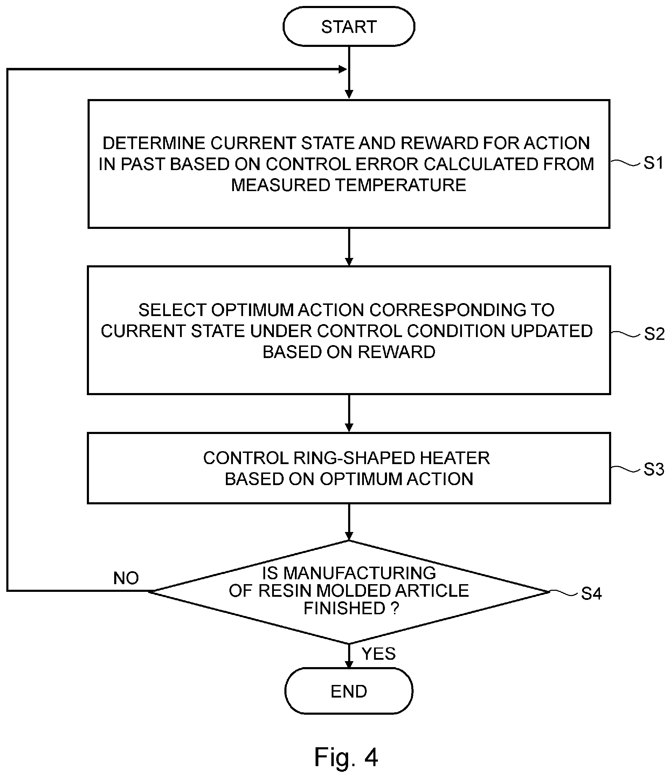

Next, a method for controlling the continuous kneading apparatus according to the second embodiment will be described in detail with reference to Fig. 4. Fig. 4 is a flowchart showing a method for controlling the continuous kneading apparatus according to the second embodiment. The following description will be given while referring to Fig. 3 as appropriate as well as referring to Fig. 4.

Firstly, as shown in Fig. 4, the state observation unit 71 of the controller 70 shown in Fig. 3 calculates, for each heaters 14, a control error from a temperature measured by the temperature sensors 61. Then, based on the calculated control error, the state observation unit 71 determines a current state st and a reward rw for an action ac selected in the past (Step S1). Note that, at the start of the control, since there is no action ac selected in the past (e.g., no action ac selected in the last control) and hence it is impossible to determine the reward rw. Therefore, only the current state st at the start of the control is determined.

Next, as shown in Fig. 4, the control condition learning unit 72 of the controller 70 updates a control condition, which is a combination of a state st and an action ac, based on the reward rw. Then, the control condition learning unit 72 selects an optimum action ac corresponding to the current state st under the updated control condition (Step S2). Note that, at the start of the control, the control condition is not updated and remains as the initial value, but the optimum action ac corresponding to the state st at the start of the control is selected.

Then, as shown in Fig. 4, the control signal output unit 74 of the controller 70 outputs a control signal ctr to the heater 14 based on the optimum action ac selected by the control condition learning unit 72 (Step S3).

When the manufacturing of the resin molded article has not been completed yet (Step S4 No), the process returns to the step S1 and the control is continued. On the other hand, when the manufacturing of the resin molded article has been completed (Step S4 Yes), the control is finished. That is, the steps S1 to S3 are repeated until the manufacturing of the resin molded article is completed.

The rest of the configuration is similar to that of the first embodiment, and therefore the description thereof will be omitted.

### (Modified Example of Second Embodiment)

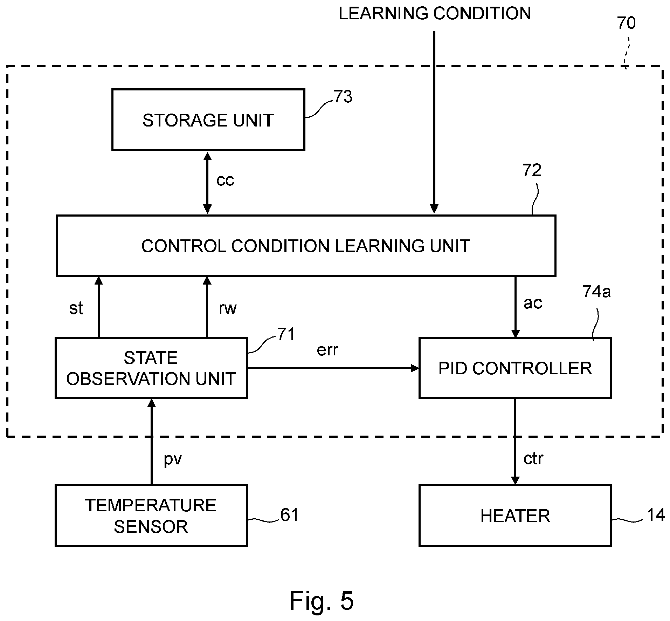

Next, a continuous kneading apparatus according to a modified example of the second embodiment will be described with reference to Fig. 5. The overall configuration of the continuous kneading apparatus according to the modified example of the second embodiment is similar to that of the continuous kneading apparatus according to the first embodiment shown in Fig. 1, and therefore the description thereof will be omitted. The configuration of the controller 70 of the continuous kneading apparatus according to the modified example of the second embodiment differs from that of the continuous kneading apparatus according to the second embodiment.

Fig. 5 is a block diagram showing the configuration of the controller 70 according to the modified example of the second embodiment. As shown in Fig. 5, the controller 70 according to the modified example of the second embodiment includes a state observation unit 71, a control condition learning unit 72, a storage unit 73, and a PID controller 74a. That is, the controller 70 according to the modified example of the second embodiment includes the PID controller 74a as the control signal output unit 74 included in the controller 70 according to the second embodiment shown in Fig. 3. The PID controller 74a is also an example of the control signal output unit.

Similarly to the second embodiment, the state observation unit 71 determines, for each heater 14, a current state st and a reward rw for an action ac selected in the past based on the calculated control error err. Then, the state observation unit 71 outputs the current state st and the reward rw to the control condition learning unit 72. Further, the state observation unit 71 according to the modified example of the second embodiment outputs the calculated control error err to the PID controller 74a.

Similarly to the second embodiment, the control condition learning unit 72 also performs reinforcement learning for each heater 14. Specifically, the control condition learning unit 72 updates a control condition (a learning result) based on the reward rw, and selects an optimum action ac corresponding to the current state st under the updated control condition. Note that, in the second embodiment, the output to the heater 14 is directly changed according to the content (i.e., the details) of the action ac selected by the control condition learning unit 72. In contrast, in the modified example of the second embodiment, a parameter(s) of the PID controller 74a is changed according to the content (e.g., the details) of the action ac selected by the control condition learning unit 72.

As shown in Fig. 5, the parameter of the PID controller 74a is successively changed based on the action ac output from the control condition learning unit 72. Meanwhile, the PID controller 74a outputs a control signal ctr to the heater 14 based on the received control error err. The control signal ctr is, for example, a voltage signal.

The rest of the configuration is similar to that of the second embodiment, and therefore the description thereof will be omitted.

As described above, in the continuous kneading apparatus according to the modified example of the second embodiment, PID control is used, so that it is necessary to adjust a parameter(s) when a process condition(s) is changed. In the continuous kneading apparatus according to the modified example of the second embodiment, the controller 70 updates the control condition (the learning result) based on the reward rw through the reinforcement learning, and selects an optimum action ac corresponding to the current state st under the updated control condition. Note that the action ac in the reinforcement learning is to change a parameter of the PID controller 74a. Therefore, even when a process condition(s) is changed, it is possible to reduce the time taken for the adjustment of the parameter and the amount of a resin material required therefor as compared to those in the second embodiment.

### (Third Embodiment)

### <Configuration of Continuous Kneading Apparatus>

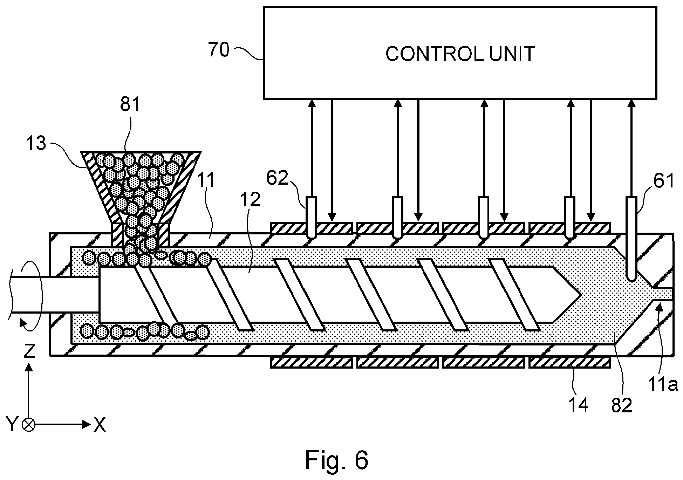

Next, a continuous kneading apparatus according to a third embodiment will be described with reference to Fig. 6. Fig. 6 is a schematic cross-sectional view showing the configuration of the continuous kneading apparatus according to the third embodiment. As shown in Fig. 6, the continuous kneading apparatus according to this embodiment includes, in addition to the cylinder 11, the screw 12, the hopper 13, the heaters 14, the temperature sensor 61, and the controller 70 shown in Fig. 1, temperature sensors 62.

That is, the continuous kneading apparatus according to this embodiment has a configuration that is obtained by combining the continuous kneading apparatus according to the first embodiment shown in Fig. 1 with the continuous kneading apparatus according to the comparative example shown in Fig. 2. Further, in the continuous kneading apparatus according to this embodiment, the controller 70 is configured so that its control mode can be switched between a resin temperature control mode (first control mode) and a cylinder temperature control mode (second control mode).

In the resin temperature control mode, similarly to the continuous kneading apparatus according to the first embodiment shown in Fig. 1, the controller 70 performs feedback control for the heating unit, i.e., the heaters 14, based on the temperature of the molten resin 82 measured by the first temperature sensor 61.

In contrast, in the cylinder temperature control mode, similarly to the continuous kneading apparatus according to the comparative example shown in Fig. 2, the controller 70 performs feedback control for the heaters 14 based on the temperatures of the heated parts of the cylinder 11 measured by the second temperature sensors 62.

In the continuous kneading apparatus according to the first embodiment shown in Fig. 1, when the inside of the cylinder 11 is not filled with the molten resin 82, such as when the continuous kneading apparatus is just started, the temperature of the molten resin 82 cannot be measured by the temperature sensor 61, so that the heaters 14 cannot be feedback-controlled.

In contrast to this, in the continuous kneading apparatus according to this embodiment shown in Fig. 6, when the inside of the cylinder 11 is not filled with the molten resin 82, the heaters 14 can be feedback-controlled based on the temperatures of the heated parts of the cylinder 11 measured by the temperature sensors 62. Then, after the inside of the cylinder 11 is filled with the molten resin 82, the heaters 14 can be feedback-controlled based on the temperature of the molten resin 82 measured by the temperature sensor 61.

The rest of the configuration is similar to that of the first embodiment, and therefore the description thereof will be omitted. Further, the third embodiment and the second embodiment may be combined with each other.

### < Control Method for Continuous Kneading Apparatus>

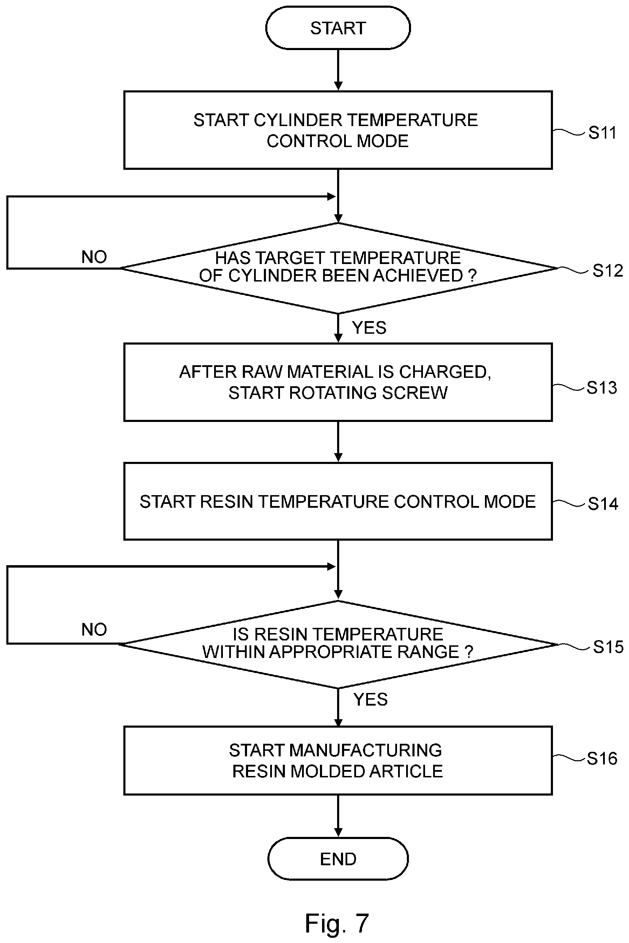

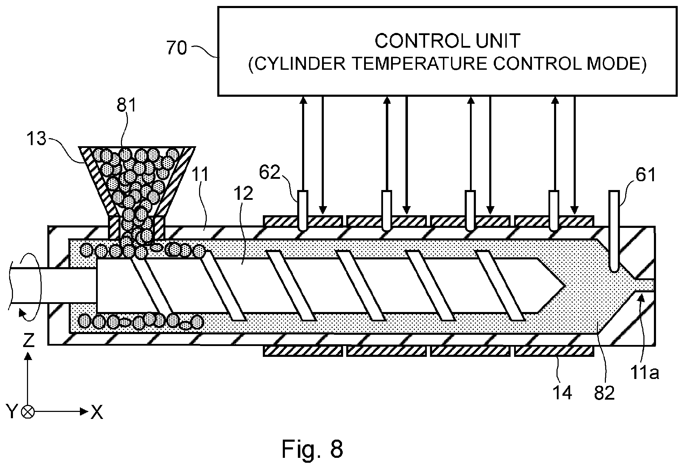

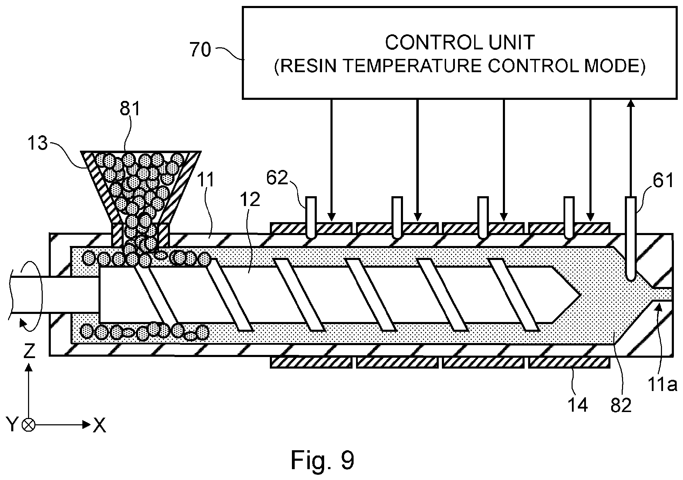

Next, a method for controlling the continuous kneading apparatus according to the third embodiment will be described in detail with reference to Figs. 7 to 9. Fig. 7 is a flowchart showing a method for controlling the continuous kneading apparatus according to the third embodiment. Fig. 8 is a schematic cross-sectional view of the continuous kneading apparatus in the cylinder temperature control mode. Fig. 9 is a schematic cross-sectional view of the continuous kneading apparatus in the resin temperature control mode. The following description will be given while referring to Figs. 8 and 9 as appropriate as well as referring to Fig. 7.

Firstly, as shown in Fig. 7, after the continuous kneading apparatus is started, the cylinder temperature control mode is started (Step S11). As shown in Fig. 8, in the cylinder temperature control mode, the controller 70 performs feedback control for the heaters 14 based on the temperatures of the heated parts of the cylinder 11 measured by the temperature sensors 62.

Next, when the temperature of the cylinder 11 reaches the target temperature (Yes in Step S12), the raw material, i.e., resin pellets 81, is charged into the cylinder 11, and the rotation of the screw 12 is started while the cylinder temperature control mode is continued (Step S13). On the other hand, when the temperature of the cylinder 11 does not reach the target temperature (No in Step S12), the cylinder temperature control mode is continued without charging the raw material into the cylinder 11.

Note that in the cylinder temperature control mode, when any of the temperatures of the heated parts of the cylinder 11 measured by the temperature sensors 62 exceeds a predetermined upper limit temperature, the controller 70 may output an alarm. Further, when the error, e.g., the difference, between the target temperature of the cylinder 11 and any of the temperatures of the heated parts of the cylinder 11 measured by the temperature sensors 62 exceeds a predetermined upper limit value, the controller 70 may output an alarm.

Although there is no particular limitation, the alarm is expressed by, for example, text, a symbol, a figure, a sound, or a combination of at least two of them. When the alarm is expressed by text, a symbol, a figure, or the like, it is displayed on a display unit such as a monitor (not shown).

Next, after the step S13, when the inside of the cylinder 11 is filled with the molten resin 82, the control mode is switched from the cylinder temperature control mode to the resin temperature control mode. That is, the resin temperature control mode is started (Step S14). As shown in Fig. 9, in the resin temperature control mode, the controller 70 performs feedback control for the heating unit, i.e., the heaters 14, based on the temperature of the molten resin 82 measured by the temperature sensor 61.

Next, when the temperature of the molten resin 82 is within a proper range (Yes in Step S15), the manufacturing of a resin molded article(s), i.e., a product(s), is started while the resin temperature control mode is continued (Step S16). On the other hand, when the temperature of the molten resin 82 is not within the proper range (No in Step S15), the manufacturing of a resin molded article(s), i.e., a product(s), is not started, and the resin temperature control mode is continued.

Note that even in the resin temperature control mode, when any of the temperatures of the heated parts of the cylinder 11 measured by the temperature sensors 62 exceeds the predetermined upper limit temperature, the controller 70 may output an alarm.

### (Modified Example of Third Embodiment)

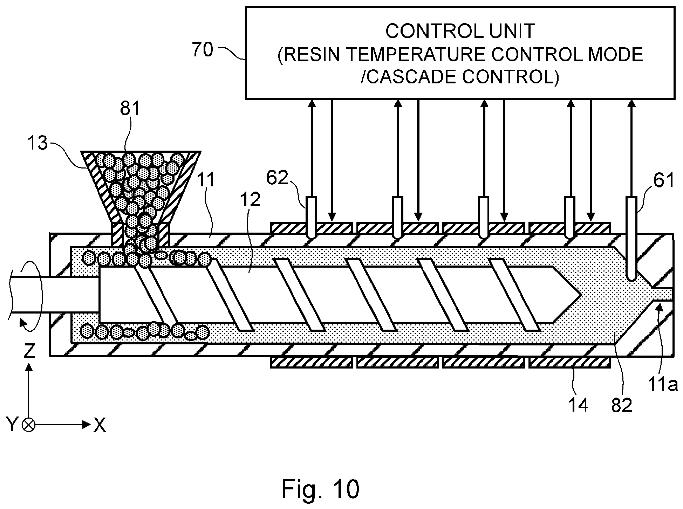

Next, a continuous kneading apparatus according to a modified example of the third embodiment will be described with reference to Fig. 10. The overall configuration of the continuous kneading apparatus according to the modified example of the third embodiment is similar to that of the continuous kneading apparatus according to the third embodiment shown in Fig. 6, and therefore the description thereof will be omitted.

As shown in Fig. 10, in the continuous kneading apparatus according to the modified example, in the resin temperature control mode, the controller 70 performs cascade control using the temperatures of parts of the cylinder 11 measured by the temperature sensors 62 in addition to the temperature of the resin measured by the temperature sensor 61.

More specifically, firstly, the controller 70 determines set temperatures for the heaters 14 based on the temperature of the molten resin 82 measured by the temperature sensor 61. For example, the controller 70 determines the set temperatures for heaters 14 based on the error, e.g., the difference, between the target resin temperature and the temperature of the molten resin 82 measured by the temperature sensor 61.

Next, the controller 70 performs feedback control for the heaters 14 based on the determined set temperatures and the temperatures of the heated parts of the cylinder 11 measured by the temperature sensors 62. For example, the controller 70 performs feedback control for the heaters 14 based on the errors, e.g., the differences, between the determined set temperatures and the temperatures of the heated parts of the cylinder 11 measured by the temperature sensors 62.

In the continuous kneading apparatus according to the modified example of the third embodiment, it is possible to, by the cascade control described above, control the temperature of the discharged molten resin 82 more accurately than in the continuous kneading apparatus according to the third embodiment. As a result, it is possible to reduce the time required to stabilize the quality of the resin to be molded and reduce the amount of the resin material.

The rest of the configuration is similar to that of the third embodiment, and therefore the description thereof will be omitted. Further, the modified example of the third embodiment and the second embodiment may be combined with each other.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A continuous kneading apparatus comprising:
a cylinder (11) into which resin pellets (81) are charged;
a screw (12) housed in the cylinder (11) and configured to knead the resin pellets (81);
a heating unit (14) disposed so as to cover an outer peripheral surface of the cylinder (11) and configured to heat the resin pellets (81);
a first temperature sensor (61) disposed inside the cylinder (11) and configured to measure a temperature of a molten resin (82) obtained by melting resin pellets (81); and
a controller (70) configured to perform feedback control the heating unit (14) based on the temperature of the molten resin (82) measured by the first temperature sensor (61).

2. The continuous kneading apparatus according to claim 1, wherein the first temperature sensor (61) is disposed between a tip of the screw (12) and a discharge port (11a) inside the cylinder (11).

3. The continuous kneading apparatus according to claim 1, further comprising a second temperature sensor (62) configured to measure a temperature of a heated part of the cylinder (11) heated by the heating unit (14), wherein
the controller (70) outputs an alarm when the temperature of the heated part measured by the second temperature sensor (62) exceeds a predetermined upper limit temperature.

4. The continuous kneading apparatus according to claim 1, further comprising a second temperature sensor (62) configured to measure a temperature of a heated part of the cylinder (11) heated by the heating unit (14), wherein
the controller (70) is configured so that its control mode is switched between
a first control mode in which the heating unit (14) is feedback-controlled based on the temperature of the molten resin (82) measured by the first temperature sensor (61), and
a second control mode in which the heating unit (14) is feedback-controlled based on the temperature of the heated part measured by the second temperature sensor (62).

5. The continuous kneading apparatus according to claim 4, wherein in the first control mode,
a set temperature for the heating unit (14) is determined based on the temperature of the molten resin (82) measured by the first temperature sensor (61), and
an output of the heating unit (14) is determined based on the set temperature and the temperature of the heated part measured by the second temperature sensor (62).

6. The continuous kneading apparatus according to claim 4 or 5, wherein when the continuous kneading apparatus is started, the controller (70) first operates in the second control mode and then operates in the first control mode.

7. The continuous kneading apparatus according to claim 3 or 4, wherein
the heating unit (14) comprises a plurality of annular heaters arranged in a longitudinal direction of the cylinder (11), and
the second temperature sensor (62) is provided for each of the plurality of annular heaters.

8. A method for controlling a continuous kneading apparatus,
the continuous kneading apparatus comprising:
a cylinder (11) into which resin pellets (81) are charged;
a screw (12) housed in the cylinder (11) and configured to knead the resin pellets (81);
a heating unit (14) disposed so as to cover an outer peripheral surface of the cylinder (11) and configured to heat the resin pellets (81); and
a first temperature sensor (61) disposed inside the cylinder (11) and configured to measure a temperature of a molten resin (82) obtained by melting resin pellets (81),
the method comprising the step of (a) performing feedback control for the heating unit (14) based on the temperature of the molten resin (82) measured by the first temperature sensor (61).

9. The method for controlling the continuous kneading apparatus according to claim 8, wherein the first temperature sensor (61) is disposed between a tip of the screw (12) and a discharge port (11a) inside the cylinder (11).

10. The method for controlling the continuous kneading apparatus according to claim 8, wherein
the continuous kneading apparatus further comprises a second temperature sensor (62) configured to measure a temperature of a heated part of the cylinder (11) heated by the heating unit (14), and
in the step (a), an alarm is output when the temperature of the heated part measured by the second temperature sensor (62) exceeds a predetermined upper limit temperature.

11. The method for controlling the continuous kneading apparatus according to claim 8, wherein
the continuous kneading apparatus further comprises a second temperature sensor (62) configured to measure a temperature of a heated part of the cylinder (11) heated by the heating unit (14), and
the method further comprises the step of (b) performing feedback control for the heating unit (14) based on the temperature of the heated part measured by the second temperature sensor (62).

12. The method for controlling the continuous kneading apparatus according to claim 11, wherein in the step (a),
a set temperature for the heating unit (14) is determined based on the temperature of the molten resin (82) measured by the first temperature sensor (61), and
an output of the heating unit (14) is determined based on the set temperature and the temperature of the heated part measured by the second temperature sensor (62).

13. The method for controlling the continuous kneading apparatus according to claim 11 or 12, wherein when the continuous kneading apparatus is started, the step (b) is first performed and then the step (a) is performed.

14. The method for controlling the continuous kneading apparatus according to claim 10 or 11, wherein in the continuous kneading apparatus,
the heating unit (14) comprises a plurality of annular heaters arranged in a longitudinal direction of the cylinder (11), and
the second temperature sensor (62) is provided for each of the plurality of annular heaters.
